# FASCICULE DE BREVET EUROPEEN

(11) **EP 0 504 019 B1**
(45) Date de publication et mention de la délivrance du brevet: **14.12.1994**
(21) Numéro de dépôt: 92400582.0
(22) Date de dépôt: 06.03.1992
(51) Int. Cl.: C02F 3/30, C02F 3/06

(54) **Procédé d'épuration biologique des eaux par nitrification et dénitrification**
Verfahren für die biologische Reinigung von Wasser durch Nitrifikation und Denitrifikation
Process for biological purification of water by nitrification and denitrification

(30) Priorité: 08.03.1991 FR 9102842
(43) Date de publication de la demande: 16.09.1992
(73) Titulaire: OTV (OMNIUM de TRAITEMENTS et de VALORISATION), 92407 Courbevoie (FR)
(72) Inventeur: Payraudeau, Michèle, Cabinet Ballot-Schmit, F -75116 Paris (FR); Rogalla, Franck, Cabinet Ballot-Schmit, F -75116 Paris (FR)
(74) Mandataire: Vidon, Patrice

(56) Documents cités:
- DE-A- 3 716 598
- FR-A- 2 604 990
- WATER RESEARCH. vol. 13, Septembre 1979, OXFORD GB pages 1009 - 1015; KLAPWIJKA. ET AL: 'THE APPLICATION OF AN UPFLOW REACTOR IN THE DENITRIFICATION STEP OFBIOLOG'
- WATER RESEARCH. vol. 15, no. 1, Janvier 1981, OXFORD GB pages 1 - 6; KLAPWIJKA. ET AL.: 'BIOLOGICAL DENITRIFICATION IN AN UPFLOW SLUDGE BLANKET REACTOR'
- PATENT ABSTRACTS OF JAPAN vol. 13, no. 69 (C-569)(3417) 16 Février 1989 & JP-A-63 258 695 (JAPAN ORGANO CO LTD) 26 Octobre 1988

## Description

La présente invention a trait au domaine du traitement des eaux usées et résiduaires ou encore toutes eaux contenant de l'azote ammoniacal. Elle concerne plus spécialement un procédé d'épuration des eaux permettant d'éliminer ou de réduire considérablement l'azote total de l'eau par transformation de l'azote ammoniacal en ions nitrates puis élimination de ces derniers, autrement dit selon un processus de nitrification et dénitrification.

Dans les installations conventionnelles, destinées à éliminer l'azote des eaux usées par le procédé à boues activées, l'eau résiduaire à traiter est acheminée, après décantation primaire, dans des bassins ou cuves fonctionnant en aérobie (formation des nitrates à partir de l'azote ammoniacal) puis en anaérobie ou anoxie (dénitrification en présence de source carbonée, avec formation d'azote), les nitrates formés dans la cuve en aérobie étant renvoyés en tête dans la cuve ou récepteur en anoxie. Les cuves sont suivies d'au moins un clarificateur dont les boues recueillies sont envoyées en zone anoxie. On peut aussi opérer dans un bassin unique muni de zones ou sections alternativement aérées et non aérées (brevet français publié n° 2 372 121) en utilisant un grand volume de biomasse. Dans tous les cas, la biomasse est peu concentrée (en général moins de 5 g/1) et les deux zones opérationnelles sont traversées par un mélange de deux espèces de bactéries dénitrifiantes et nitrifiantes. De ce fait, les bactéries se trouvent souvent dans des conditions défavorables du fait qu'elles circulent dans des zones où elles ne peuvent remplir leur fonction de bactéries hétérotrophes ou autotrophes selon les zones de traitement.

Pour tenter de remédier au faible taux de croissance des bactéries nitrifiantes (autotrophes) et s'affranchir d'un clarificateur, on peut fixer ces bactéries sur un support, par exemple selon une épuration en deux zones (brevet français publié n° 2 604 990) ou encore par utilisation de lits allégés avec un matériau moins dense que l'eau (brevet français publié n° 2 632 947). Afin d'éliminer l'azote, une partie du lit fixe peut être non aérée. Ces techniques présentent un intérêt certain mais, lors de leur mise en oeuvre, les grains servant de support aux bactéries peuvent se mélanger régulièrement par des lavages et se coloniser de façon mixte en nitrification et dénitrification. Les bactéries spécialisées se trouvent donc ainsi de temps en temps, dans des conditions non favorables à leur développement, comme dans le procédé dit à boues activées. Par ailleurs, les lits granulaires sont sensibles au colmatage lors de fortes concentrations en matières particulaires de l'influent à traiter et il est donc souvent nécessaire d'adjoindre au processus une décantation primaire.

Un des principaux buts de l'invention est de chercher à s'affranchir de la nécessité d'une décantation primaire. Un autre but, essentiel, est de maintenir les bactéries spécialisées dans les conditions optimales où elles peuvent remplir leurs fonctions respectives. Un autre but encore est de réduire le colmatage du réacteur aérobie par les matières particulaires de l'eau à traiter.

Pour atteindre ces buts, l'idée-mère ayant servi de base à la conception de l'invention a été de chercher à coupler un lit de boue ascendant, maintenant une colonie de bactéries en anoxie et donc alimenté par une eau usée brute riche en carbone, avec un réacteur fonctionnant en aérobie, donc à charge organique faible et forte aération, spécialisé en nitrification.

On a déjà cherché selon l'art antérieur à traiter des eaux dans des réacteurs à biomasse constituée par des lits de boues, notamment selon deux configurations : en traitement anaérobique pour des effluents concentrés en carbone (Lettinga & al, Biotechnology and Bioengineering vol XXII, P. 699-734, 1980); en traitement anoxie pour des éluats d'échangeurs d'ions riches en nitrates (Van der Hoek & al, Appl Microbiol. Biotechnol. 27, p. 199-205, 1987). Dans ces processus, les fortes concentrations en substrat donnent lieu à des vitesses ascensionnelles faibles, de l'ordre de 0,5 m/h pour l'ensemble des débits d'alimentation et de recyclage. En outre, ces concentrations provoquent une importante formation de gaz (méthane et oxyde carbonique en anaérobie, azote en anoxie), ce qui nécessite un séparateur de gaz en partie supérieure des réacteurs, comme par exemple les dispositifs connus à lamelles inclinées.

On a également proposé plus récemment des réacteurs en aérobie à boues granuleuses et qui sont alimentés par de l'eau décantée. Toutefois, ces techniques nécessitent soit une prédissolution de l'oxygène (Mishana & al; Water Science Techn. 23, p. 981-990, 1991) soit des cuves d'aération intermédiaires (Takahashi & al, Water Science Tech. 23, p. 973-980, 1991). Les concentrations des boues obtenues sont toutefois limitées à 10 g/l. Conformément à l'invention, on a visé le traitement d'eaux résiduaires, notamment d'effluents urbains en ramenant depuis un réacteur aérobie une partie du flux de nitrates et en opérant à des vitesses ascensionnelles de flux à traiter considérablement plus élevées que dans l'art antérieur.

Selon le procédé de l'invention, l'eau brute à traiter, qui n'a pas besoin de subir de décantation préliminaire, est introduite en totalité en ascendant dans un premier réacteur à lit de boues fonctionnant en anoxie, l'effluent étant envoyé en tête d'un second réacteur à bactéries fixées, fonctionnant en aérobie, une partie de l'eau traitée, en surverse de ce second réacteur, étant recyclée à la base du premier réacteur.

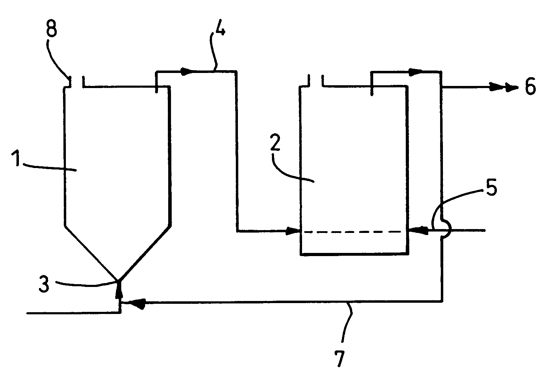

Du fait que l'on s'affranchit d'une décantation préliminaire, le flux qui pénètre en ascendant dans le réacteur anoxie donne lieu à une boue granuleuse alourdie par les matières en suspension dans l'influent brut, et de forte concentration généralement comprise entre 30 et 100 g/l. Les vitesses de l'influent sont très élevées, au moins égales à 3 m/h et peuvent être généralement comprises entre 5 et 10 m/h. Par ailleurs, du fait que l'influent est dilué par le recyclage précité d'eau en surverse du réacteur en aérobie, la production de gaz est réduite et l'installation de traitement selon l'invention ne nécessite pas de dispositif de séparateur de phases. Enfin, grâce à l'oxygène dissous et aux nitrates contenus dans le flux de recyclage du second réacteur aérobie, on peut s'affranchir des phases de prédissolution d'oxygène et de cuves d'aération intermédiaire préconisées dans l'art antérieur précité. En résumé, grâce à la spécification des biomasses qui remplissent chacune leur fonction propre, sans être mélangées comme bien souvent dans l'art antérieur, on intensifie les réactions dans chacune des phases de nitrification et dénitrification. Le procédé selon l'invention peut être mis en oeuvre dans une installation de traitement schématisée sur la figure unique annexée de dessins où 1 représente le réacteur fonctionnant en anoxie et 2 le réacteur travaillant en aérobie. L'eau brute à traiter, chargée en pollution carbonée et azotée, est envoyée par le bas, en 3, du réacteur 1. L'effluent 4 issu du réacteur 1 est acheminé dans le réacteur aérobie 2 alimenté en air ou source d'oxygène en 5. L'eau traitée, issue du réacteur 2, est en partie évacuée 6 et en partie recyclée, selon 7, dans l'influent 3.

Dans le réacteur 1, à biomasse libre sous forme de lit de boues et où l'alimentation peut être faite en continu ou par pulsations, il est nécessaire de répartir l'influent sur une grande surface et il est donc conseillé d'utiliser des grilles et/ou séries de buses de répartition de flux. De préférence, on soumet la masse à une agitation et/ou à un raclage des boues de façon à permettre aux bulles d'azote de s'échapper par l'évent 8. On peut aussi installer, en haut de ce réacteur 1, un décanteur lamellaire incliné, selon la technique déjà connue.

Le réacteur en aérobie 2 peut fonctionner de diverses façons et selon des variantes déjà connues en soi comme par exemple : en biomasse, fixée selon le procédé dit "Biocarbone" (marque déposée) (brevets français publiés n° 2 358 362, 2 439 749, 2 604 990); en combinaison, lit fluidisé et lit fixe avec des particules de lit de densité inférieure à l'eau (brevet français publié n° 2 632 947); avec des lits bactériens fixes non immergés ou encore des disques biologiques...

L'eau brute à traiter, généralement soumise au préalable à un dessablage, un dégrillage et un déshuilage, peut être additionnée de réactifs destinés à augmenter la vitesse de chute des boues, comme par exemple des floculants tels que alun, chlorure ferrique ou polymères. On peut également ajouter de la chaux pour former des carbonates et précipiter le phosphore. L'addition de nitrates minéraux ainsi que de sources de carbone (éthanol ou autre) s'avère également avantageuse dans de nombreux cas.

### Exemples de réalisation

### 1. Traitement d'une eau usée urbaine

On a opéré dans une installation telle que schématisée sur la figure annexée où le réacteur 1 avait une hauteur de 3 mètres et un diamètre de 50 cm, le second réacteur 2 en aérobie étant de type "Biocarbone" à lit fixe, avec injection d'air oxygéné.

L'eau brute (influent) introduite en 3 contenait environ 50 mg d'azote (de NH₄) par litre d'eau; elle avait une DC0 de 500 mg/l et un taux de M.E.S (matières en suspension) de 250 mg/l.

La vitesse ascensionnelle de l'influent 3 était de 5 m/h dont 1,5 m/h à attribuer à l'eau brute d'entrée et 3,5 m/h pour la recirculation, selon 7, de l'eau issue du réacteur aérobie 2. La concentration en azote dans ce réacteur était de 10mg/l environ et le temps de séjour apparent compris entre 1 et 2 heures dans le réacteur 1 en anoxique. La concentration des boues était maintenue à 50 g/l en moyenne; les charges appliquées sur le lit de boues pouvaient atteindre 10 kg de DC0 par m³ et par jour et 1 kg de N (de N0₃) par m³ et par jour.

L'eau en sortie 4 du réacteur 1, contenait encore du NH₄ (environ 15 mg/l en N), 100 mg de DC0, 50 à 100 mg de M.E.S et pratiquement plus de nitrates.

Après traitement, l'eau purifiée en 6 contenait environ 10 mg/l de nitrates (en N de N0₃), moins de 1 mg/l environ.

### 2. Traitement d'une eau à potabiliser

L'eau à traiter, enrichie en éthanol, avait une teneur en N (N de NH₄) de 4 mg/l, un taux M.E.S inférieur à 10 mg/l, une DCO inférieure ou égale à 10 mg/l et un taux d'azote (N et N0₃) de 20 mg/l. A la sortie 6 du second réacteur 2 (dans ce cas fonctionnant en filtre aéré) la DC0 et le taux de M.E.S étaient pratiquement nuls et le taux d'azote (N de N0₃) avait chuté à 5 mg/l maximum.

Bien que la description qui précède et le dessin annexé se réfèrent aux cas de deux réacteurs indépendants, l'un à côté de l'autre, l'invention s'applique également, à tire de variante aux cas où d'une part le réacteur aérobie est superposé au récepteur anoxie et où, d'autre part, les phases anoxie et aérobie sont réalisées en deux zones distinctes dans le même réacteur alimenté en courant ascendant.

## Revendications

1. Procédé pour la nitrification et la dénitrification d'une eau polluée, par traitement biologique en milieu aérobie puis anaérobie (ou anoxie), caractérisé en ce que l'eau brute à traiter, sans décantation préliminaire, est introduite en totalité de façon ascendante dans un premier réacteur (1) fonctionnant en anoxie, à biomasse libre sous forme de lit de boues de concentration comprise entre 30 et 100 g/l, et alimenté avec un grand débit ascensionnel et en ce que l'effluent (4) est envoyé dans un deuxième réacteur à bactéries fixées (2) fonctionnant en aérobie, une partie de l'eau traitée (7), en surverse de ce deuxième réacteur, étant recyclée à la base du premier réacteur (1) et en ce que le débit total d'introduction d'eau (3) à la base du réacteur en anoxie (1) et comprenant l'influent et l'eau recyclée (7) correspond à des vitesses ascensionnelles d'au moins 3 m/H.

2. Procédé selon la revendication 1, caractérisé en ce que le deuxième réacteur (2) fonctionne comme un biofiltre aéré.

3. Procédé selon l'une quelconque des revendications 1 ou 2 caractérisé en ce que le lit de boues dans le réacteur en anoxie (1) est agité au fond pour améliorer l'équirépartition.

4. Procédé selon l'une quelconque des revendications 1 à 3, caractérisé en ce que le réacteur (1) est équipé dans sa partie supérieure de lamelles inclinées pour augmenter les vitesses de séparation eau/boue.

5. Procédé selon l'une quelconque des revendications 1 à 4, caractérisé en ce que l'alimentation de l'influent (eau brute) est faite en continu ou par pulsations, de façon séquencée.

6. Procédé selon l'une quelconque des revendications 1 à 5, caractérisé en ce que l'eau brute à traiter est additionnée au préalable de réactifs choisis dans le groupe : floculants, source de chaux et de nitrates minéraux, source de carbone.

7. Procédé selon l'une quelconque des revendications 1 à 6, caractérisé en ce que les réacteurs (1) et (2) sont indépendants et côte à côte.

8. Procédé selon l'une quelconque des revendications 1 à 7, caractérisé en ce que le réacteur en aérobie (2) est superposé au réacteur en anoxie (1), les deux phases anoxie et aérobie pouvant être réalisées en deux zones distinctes au sein du même réacteur alimenté en courant ascendant.

## Claims

1. Process for the nitrification and denitrification of polluted water by biological treatment in an aerobic and then anaerobic (or anoxic) medium, characterised in that the untreated water to be treated, without preliminary settlement, is introduced in its entirety, upwards, into a first reactor (1) functioning anoxically, with a free biomass in the form of a bed of sludge with a concentration of between 30 and 100 g/l, and fed at a high upward flow rate, and in that the effluent (4) is sent into a second reactor with fixed bacteria (2) operating aerobically, some of the treated water (7), overflowing from this second reactor, being recirculated to the base of the first reactor (1), and in that the total rate at which water (3) is introduced at the base of the anoxic reactor (1) and comprising the influent and the recirculated water (7) corresponds to upward speeds of at least 3 m/h.

2. Process according to Claim 1, characterised in that the second reactor (2) functions as an aerated biofilter.

3. Process according to either one of Claims 1 or 2, characterised in that the sludge bed in the anoxic reactor (1) is stirred at the bottom in order to improve evenness of distribution.

4. Process according to any one of Claims 1 to 3, characterised in that the reactor (1) is equipped in its top part with inclined blades in order to increase the speeds of separation of the water and sludge.

5. Process according to any one of Claims 1 to 4, characterised in that the influent (untreated water) is fed in continuously or in pulsations, in a sequential manner.

6. Process according to any one of Claims 1 to 5, characterised in that reagents chosen from the group consisting of flocculants, a source of lime and mineral nitrates, and a source of carbon, are first added to the untreated water to be treated.

7. Process according to any one of Claims 1 to 6, characterised in that the reactors (1) and (2) are independent and side by side.

8. Process according to any one of Claims 1 to 7, characterised in that the aerobic reactor (2) is placed above the anoxic reactor (1), and the two anoxic and aerobic phases can be carried out in two separate areas within the same reactor fed with an upward flow.

## Patentansprüche

1. Verfahren für die Nitrifikation und Denitrifikation von verunreinigtem Wasser durch biologische Behandlung im aeroben und dann anaeroben (oder anoxischen) Milieu,
dadurch gekennzeichnet, daß die Gesamtheit des zu reinigenden Schmutzwassers ohne vorherige Dekantierung steigend in einen ersten Reaktionsbehälter (1) eingespeist wird, der unter anoxischen Bedingungen arbeitet, mit freier Biomasse in Form eines Schlammbetts, deren Konzentration zwischen 30 und 100 g/l beträgt, der mit starkem Durchsatz in steigender Richtung gespeist wird, daß das Ablaufwasser (4) in einen zweiten, aerobisch arbeitenden Reaktionsbehälter mit vorgegebenen Bakterien (2) geleitet wird, wobei ein Teil des behandelten Wassers (7), der Überlauf aus diesem zweiten Reaktionsbehälter zum unteren Teil des ersten Reaktionsbehälters (1) zurückgeführt wird, daß der gesamte Durchsatz der Wassereinspeisung (3) am unteren Teil des anoxisch arbeitenden Reaktionsbehälters (1), der das neu eingespeiste und das zurückgeführte Wasser (7) umfaßt, Steiggeschwindigkeiten von mindestens 3 m/h aufweist.

2. Verfahren nach Anspruch 1,
dadurch gekennzeichnet, daß der zweite Reaktionsbehälter (2) als ein belüfteter Biofilter arbeitet.

3. Verfahren nach einem der Ansprüche 1 oder 2,
dadurch gekennzeichnet, daß der Boden des Schlammbetts im anoxisch arbeitenden Reaktionsbehälter (1) umgerührt wird, um die gleichmäßige Verteilung zu verbessern.

4. Verfahren nach einem der Ansprüche 1 bis 3,
dadurch gekennzeichnet, daß der Reaktionsbehälter (1) am oberen Teil mit geneigten Lamellen ausgerüstet ist, um die Wasser/Schlamm-Trenngeschwindigkeit zu erhöhen.

5. Verfahren nach einem der Ansprüche 1 bis 4,
dadurch gekennzeichnet, daß die Haupteinspeisung (Schmutzwasser) kontinuierlich oder nach sequenziertem Pulsieren erfolgt.

6. Verfahren nach einem der Ansprüche 1 bis 5,
dadurch gekennzeichnet, daß dem zu reinigenden Schmutzwasser vorher Reagenzien zugegeben werden, die aus der folgenden Gruppe gewählt wurden: Flockungsmittel, Kalk- und Mineralnitratquellen, Kohlenstoffquellen.

7. Verfahren nach einem der Ansprüche 1 bis 6,
dadurch gekennzeichnet, daß die Reaktionsbehälter (1) und (2) unabhängig sind und nebeneinander liegen.

8. Verfahren nach einem der Ansprüche 1 bis 7,
dadurch gekennzeichnet, daß der aerobisch arbeitende Reaktionsbehälter (2) dem anoxisch arbeitenden Reaktionsbehälter (1) überlagert ist, wobei die zwei anoxischen und aerobischen Phasen in zwei verschiedenen Bereichen innerhalb des selben, im steigenden Strom gespeisten Reaktionsbehälters verwirklicht werden können.
